# EUROPÄISCHE PATENTSCHRIFT

(11) **EP 2 627 935 B1**
(45) Veröffentlichungstag und Bekanntmachung des Hinweises auf die Patenterteilung: **27.08.2014**
(21) Anmeldenummer: 11776367.2
(22) Anmeldetag: 27.10.2011
(51) Int. Cl.: F16K 31/42

(54) **STEUERKOPF FÜR EIN FLUIDISCH ANSTEUERBARES VENTIL**
CONTROL HEAD FOR A FLUID ACTUATED VALVE
TÊTE DE COMMANDE POUR UNE SOUPAPE A COMMANDE FLUIDIQUE

(30) Priorität: 09.11.2010 DE 102010050662
(43) Veröffentlichungstag der Anmeldung: 21.08.2013
(73) Patentinhaber: Festo AG & Co. KG, 73734 Esslingen (DE)
(72) Erfinder: MÖDINGER, Uwe, 73249 Wernau (DE); SCHNEIDER, Mathias, 71083 Herrenberg (DE)
(74) Vertreter: Kocher, Mark Werner
(86) Internationale Anmeldenummer: PCT/EP2011/005420
(87) Internationale Veröffentlichungsnummer: WO 2012/062417

(56) Entgegenhaltungen:
- EP-A1- 0 277 309
- WO-A1-2007/128360
- US-A- 3 993 284
- US-A1- 2004 099 320

## Beschreibung

Die Erfindung betrifft einen Steuerkopf für ein fluidisch ansteuerbares Ventil mit einem Grundkörper, der eine Kupplungseinrichtung zur Festlegung des Grundkörpers an einem Schaftabschnitt des Ventils aufweist und der eine Steuerventileinrichtung trägt, die zur Bereitstellung eines Steuerfluidstroms ausgebildet ist, um ein im Schaftabschnitt linearbeweglich angeordnetes fluidisches Stellmittel zur Betätigung des Ventils anzusteuern, sowie mit einer am Grundkörper angeordneten Wegmesseinrichtung, die zur Ermittlung einer axialen Position des Stellmittels längs einer Bewegungsachse ausgebildet ist.

Aus der WO 2007128360 A1 ist eine Gehäuseaggregation für Überwachungs-, Steuerungs- und Regelungssysteme für ein Prozessventil, insbesondere für ein Sterilventil zur Anwendung im Bereich der Pharmazie, der Biotechnologie und Kosmetik sowie für die Nahrungsmittel- und Getränkeindustrie bekannt. Dabei umfasst das Prozessventil wenigstens eine ein Schliessglied tragende Ventilstange und einen druckmittelbeaufschlagten Antrieb für die Ventilstange. Auf das Prozessventil kann die modular strukturierte Gehäuseaggregation an der dem Prozessventil abgewandten Seite des Antriebs mit diesem lösbar verbunden werden. Hierbei ist in die Gehäuseaggregation u eine mit der Ventilstange verbundene Antriebsstange hineingeführt, die einen Stellungsmelder aufweist, der mit der Antriebsstange kontaktiert ist und der die aktuelle Stellung der Ventilstange in Bezug auf ein festgelegtes Bezugssystem erfasst. Die Gehäuseaggregation ist dazu ausgebildet, diesbezüglich aktuelle Stellungsmeldungen zu liefern und verfügt hierzu über Mittel zur Speicherung der aktuellen Stellungsmeldungen, über Mittel zur Berechnung und zum Vergleich von Stellungsmeldungen sowie über Mittel zur optischen und/oder akustischen Meldung und/oder zum Auslesen des Funktionszustandes des Prozessventils.

Die DE 697 15 022 T2 offenbart eine Ventilbaugruppe mit einem druckbetätigbaren Ventil und einer Steuereinheit, die am einem dem Ventil entgegengesetzten Ende eines Stellglieds montiert wird. Die Steuereinheit umfasst einen Fluidkanal zur Bereitstellung eines Druckmediums mit einem ersten Ende, an dem ein Druckmedium bereitstellbar ist. Die Steuereinheit ist mit Koppelmitteln versehen, die mit Koppelmitteln am Stellglied verbindbar sind, um eine drehfeste Verbindung zwischen Steuereinheit und Stellglied zu gewährleisten. Ein zweites Ende des Fluidkanals steht in fluidischer Verbindung mit dem Stellglied. Ein normalerweise geschlossenes Ventilelement ist im Fluidkanal eingesetzt und hat ein Steuerelement, das an den beweglichen Teil des Ventils ankoppelbar ist und sich durch die Steuereinheit erstreckt. Ein äußeres Ende des Steuerelements ist mit dem Stellglied verbunden. Das Ventilelement wird gegen die Kraft von Federn oder gegen einen Differenzdruck geöffnet. Infolgedessen kann die Steuereinheit mittels einer Steckverbindung montiert werden und abgenommen werden, zur gleichen Zeit kann das Ventilelement automatisch geöffnet und beziehungsweise für schnellen und einfachen Service geschlossen werden.

Die DE 4014474 C1 offenbart ein Tellerventil mit einem auf seinem Gehäuse über ein mit Sichtöffnungen versehenes Distanzstück aufsitzenden Steuerkopf, dessen Schaft mit der Stange des Ventiltellers verbunden ist, wobei das am Boden des Steuerkopfes anflanschbare Distanzstück einstückig mit einem auf dem Ventilgehäuse befestigbaren Ventilgehäusedeckel ausgebildet ist und wobei die sich mit Überstand über den Steuerkopf durch den Steuerkopf erstreckende Ventiltellerstange in dem hohl ausgebildeten Schaft des Steuerkolbens geführt ist. Der ventilseitig an einer Ringschulter der Ventiltellerstange abgestützte Schaft des Steuerkolbens wird von einer auf den Überstand der Ventiltellerstange über den Steuerkopf aufschraubbaren Mutter beaufschlagt.

Die DE 103 36 065 A1 offenbart einen pneumatischen Ventilantrieb mit einem Gehäuse, das einen Zylinder und an jedem axialen Ende des Zylinders eine Stirnwand aufweist, sowie mit einem mit einer axialen Spindel verbundenen Kolben, der in dem Zylinder axial geführt und an seinem Umfang gegen den Zylinder abgedichtet ist, und einer an einer der Stirnwände gebildeten ersten, einheitlichen Schnittstelle für einen Steuerkopf und einer an der anderen Stirnwand gebildeten zweiten, einheitlichen Schnittstelle für eine durch die Spindel zu betätigende Ventil-Armatur.

Aus der EP 961 066 A2 ist eine frei programmierbare Stellungsanzeigevorrichtung, insbesondere für Ventile, mit einem bewegbaren Stellglied bekannt, wobei dem Stellglied eine Positionserfassungseinrichtung zugeordnet ist, welche ständig die Position des Stellglieds unter Erzeugung eines analogen Abgabesignals erfasst und das Abgabesignal der Positionserfassungseinrichtung an eine elektronische Auswerteeinrichtung für die Ermittlung der Stellungsanzeige angelegt wird.

Die Aufgabe der Erfindung besteht darin, einen Steuerkopf bereitzustellen, der eine vereinfachte Wartung des fluidisch anzusteuernden Ventils ermöglicht.

Diese Aufgabe wird mit den Merkmalen des Anspruchs 1 gelöst. Hierbei ist vorgesehen, dass der Grundkörper von einer längs der Bewegungsachse erstreckten Ausnehmung durchsetzt ist, in der eine der Kupplungseinrichtung zugehörige Verriegelungshülse drehbar gelagert aufgenommen ist, wobei die Verriegelungshülse bereichsweise einen Bewegungsraum für das Stellmittel abdichtend begrenzt. Die Verriegelungshülse erfüllt somit in vorteilhafter Weise eine Doppelfunktion, in dem sie einerseits eine mechanische Kopplung des Steuerkopfs mit dem Ventil gewährleistet und andererseits den Bewegungsraum für das Stellmittel abdichtend begrenzt. Aufgrund der hülsenartigen Ausführung der Verriegelungshülse wird eine Trennung zwischen dem eigentlichen Kupplungsbereich, in dem die mechanische Verbindung zwischen dem Steuerkopf und dem Ventil hergestellt wird, und einem Betätigungsbereich, in dem die zum Herstellen oder Lösen der Verbindung zwischen Steuerkopf und Ventil notwendigen Betätigungskräfte eingeleitet werden, erreicht. Dies ist insbesondere dann von Vorteil, wenn der Steuerkopf in der unmittelbaren Umgebung des Ventils eine möglichst glattflächige Oberfläche aufweisen soll, um eine Ablagerung von Verschmutzungen zu vermeiden und eine Reinigung der Oberflächen zu erleichtern. Derartige Anforderungen werden beispielsweise an Steuerköpfe gestellt, die zum Einsatz in der Lebensmittelindustrie vorgesehen sind. Erfindungsgemäß sind die zur Betätigung der Kupplungseinrichtung üblicherweise vorgesehenen Schlüsselflächen, beispielsweise ein Schlitz für einen Schraubendreher oder ein Innen- der Außensechskant für einen entsprechenden Sechskantschlüssel fernab des Kupplungsbereichs angeordnet. Zudem wird durch die hülsenartige Gestaltung der Verriegelungshülse der Bewegungsraum für das Stellmittel bestimmt. Bei dem Stellmittel kann es sich exemplarisch um einen Arbeitskolben des Ventils handeln, der mit einem Ventilglied gekoppelt ist und dessen Bewegung zu einer entsprechenden Bewegung des Ventilglieds führt. Für die Ansteuerung des Ventilglieds wird der Bewegungsraum, in dem das Stellmittel aufgenommen ist, mit einem vorgebbaren Fluiddruck beaufschlagt, um hierdurch eine lineare Bewegung des Stellmittels längs der Bewegungsachse hervorzurufen. Hierbei ist es vorteilhaft, wenn der Bewegungsraum durch die Verriegelungshülse zumindest bereichsweise, insbesondere in einer dem Ventil abgewandten Richtung, abdichtend begrenzt wird, da somit auf zusätzliche Abdichtmaßnahmen verzichtet werden kann.

Vorteilhafte Weiterbildungen der Erfindung sind Gegenstand der Unteransprüche.

Zweckmäßig ist es, wenn die Verriegelungshülse an einem dem Stellmittel abgewandten Endbereich abdichtend verschlossen ist. Hierbei wird die Dichtfunktion für den Bewegungsraum des Stellmittels unmittelbar durch die Verriegelungshülse gewährleistet, es sind keine zusätzlichen Maßnahmen erforderlich, die beispielsweise eine Gestaltung des Grundkörpers komplizieren würden oder zusätzliche Bauelemente erfordern würden. Vielmehr ist die Verriegelungshülse endseitig mit einer Stirnwand versehen, die einstückig angeformt sein kann oder die mittels einer kraft- und/oder stoff- und/oder formschlüssigen Verbindung mit einem daran anschließenden Hülsenabschnitt ausgebildet sein kann und die den Bewegungsraum endseitig abdichtet.

Bei einer Weiterbildung der Erfindung ist vorgesehen, dass die Verriegelungshülse an einem dem Stellmittel zugewandten Endbereich eine Verriegelungsgeometrie, insbesondere einen Gewindeabschnitt, zur formschlüssigen Festlegung des Grundkörpers am Schaftabschnitt des Ventils umfasst. Durch die formschlüssige Kopplung des Grundkörpers mit dem Schaftabschnitt kann einerseits eine mechanisch hochbelastbare Verbindung erzielt werden, andererseits ist ein Lösen des Steuerkopfs vom Ventil in einfacher Weise ausführbar. Die Verriegelungsgeometrie ist vorzugsweise als Anordnung zueinander korrespondierend ausgebildeter Gewindeabschnitte an der Verriegelungshülse und am Schaftabschnitt des Ventils vorgesehen.

Bevorzugt sind ein Wandbereich der Ausnehmung des Grundkörpers und ein Wandabschnitt der Verriegelungshülse von einem Arbeitskanal durchsetzt, der für eine kommunizierende fluidische Verbindung zwischen dem Bewegungsraum für das Stellmittel und der am Grundkörper angebrachten Steuerventileinrichtung ausgebildet ist, um eine fluidische Betätigung des Ventils zu ermöglichen. Hierdurch ist eine einfache fluidische Ankopplung der Steuerventileinrichtung, die den Fluidstrom zur Ansteuerung des Stellmittels und des damit gekoppelten Ventilglieds bereitstellt, an den Bewegungsraum, in dem das Stellmittel linearbeweglich aufgenommen ist, gewährleistet. Der Arbeitskanal erstreckt sich beispielsweise von einem Arbeitsausgang der Steuerventileinrichtung, die am Grundkörper angebracht ist, durch den Grundkörper und durch die Verriegelungshülse hindurch bis in den Bewegungsraum und ermöglicht damit die Zu- und/oder Abfuhr eines druckbeaufschlagten Fluids, beispielsweise Druckluft, in den Bewegungsraum hinein und/oder aus dem Bewegungsraum heraus. Bei einer Weiterbildung der Erfindung können auch mehrere, fluidisch voneinander getrennte Arbeitskanäle vorgesehen sein.

Bei einer Ausgestaltung der Erfindung ist vorgesehen, dass der Arbeitskanal bereichsweise als umlaufender Ringkanal zwischen dem Wandbereich der Ausnehmung des Grundkörpers und der Verriegelungshülse ausgebildet ist. Hierdurch wird eine zuverlässige kommunizierende Verbindung zwischen dem Arbeitsausgang der Steuerventileinrichtung und dem Bewegungsraum unabhängig von der rotatorischen Stellung der Verriegelungshülse gewährleistet. Bevorzugt ist der Ringkanal rotationssymmetrisch zu einer Drehachse der Verriegelungshülse ausgerichtet, so dass bei einer Drehbewegung der Verriegelungshülse um die Drehachse stets der gleiche Querschnitt des Ringkanals für den Arbeitskanal zur Verfügung steht. Der Ringkanal kann als umlaufende Ringnut in der Verriegelungshülse und/oder als umlaufende Ringnut im Wandbereich der Ausnehmung des Grundkörpers ausgebildet sein. Vorzugsweise weist die Ringnut in einer die Drehachse und/oder die Bewegungsachse umfassenden Querschnittsebene einen zumindest im Wesentlichen rechteckigen Querschnitt auf.

Bei einer vorteilhaften Weiterbildung der Erfindung ist vorgesehen, dass in axialer Richtung beabstandet zum Ringkanal wenigstens ein zwischen dem Wandbereich der Ausnehmung des Grundkörpers und der Verriegelungshülse angeordnetes, umlaufendes Dichtmittel angeordnet ist. Die Aufgabe des wenigstens einen Dichtmittels besteht darin, die drehbeweglich in der Ausnehmung des Grundkörpers aufgenommene Verriegelungshülse, die den Bewegungsraum für das Stellmittel abdichten soll, gegenüber der Umgebung abzudichten und die Drehbeweglichkeit der Verriegelungshülse sicherzustellen. vorzugsweise sind in beiden einander entgegengesetzten Raumrichtungen axial beabstandet vom Ringkanal jeweils umlaufende Dichtmittel angeordnet, um eine vorteilhafte Abdichtung des Ringkanals gegenüber der Umgebung zu gewährleisten. Bei den Dichtmitteln kann es sich beispielsweise um O-Ringe mit rundem oder rechteckigem Schnurquerschnitt handeln, die in umlaufenden Dichtungsnuten aufgenommen sind, die exemplarisch im Grundkörper und/oder in der Verriegelungshülse ausgebildet sind.

Zweckmäßig ist es, wenn die Verriegelungshülse derart am Grundkörper aufgenommen ist, dass eine Rotationsachse der Verriegelungshülse parallel zur Bewegungsachse des Stellmittels ausgerichtet ist.

Bevorzugt ist vorgesehen, dass die Wegmesseinrichtung für eine berührungslose Abtastung der axialen Position des Stellmittels durch die Verriegelungshülse hindurch ausgebildet ist. Somit sind keine zusätzlichen Kopplungsmittel für eine Wirkverbindung zwischen der Wegmesseinrichtung und den Stellmitteln notwendig. Vielmehr ist es ausreichend, den Steuerkopf mittels der Kupplungseinrichtung ortsfest auf den Ventilschaft aufzusetzen. Die zur Ermittlung der axialen Position des Stellmittels erforderliche kontaktlose Kopplung zur Wegmesseinrichtung erfolgt dabei selbsttätig, beispielsweise durch am Stellmittel vorgesehene Magnetmittel und eine Ausbildung der Wegmesseinrichtung als Magnetfeldsensor, insbesondere als REED-Schalter oder Hall-Sensor. Zudem ist durch die berührungslose Abtastung der Stellmittel die Ausführung der Abdichtung für den Bewegungsraum gegenüber der Umgebung erheblich vereinfacht, da keine mechanischen Kopplungsmittel zwischen dem Stellmittel und der Wegmesseinrichtung erforderlich sind.

Vorteilhaft ist es, wenn der Grundkörper Montageabschnitte für eine Festlegung der Wegmesseinrichtung und/oder der Steuerventileinrichtung umfasst, die die Verriegelungshülse zumindest bereichsweise umgeben. Mit Hilfe der Montageabschnitte, die beispielsweise als nutartige Ausnehmungen und/oder Montageflächen, insbesondere Planflächen und/oder Sacklöcher mit oder ohne Gewinde ausgebildet sein können, ist eine rasche und zuverlässige Festlegung der Wegmesseinrichtung und/oder der Steuerventileinrichtung am Grundkörper sichergestellt. Bevorzugt sind die Montageabschnitte derart ausgebildet, dass die Wegmesseinrichtung längs der Bewegungsachse des Stellmittels in oder an dem Montageabschnitt verschoben werden kann, um beispielsweise eine Justierung der Wegmesseinrichtung im Hinblick auf das Stellmittel zu ermöglichen. Besonders bevorzugt ist eine formschlüssige Kopplung zwischen Wegmesseinrichtung und/oder Steuerventileinrichtung und dem Grundkörper mit Hilfe des jeweils zugeordneten Montageabschnitts gewährleistet, um beispielsweise eine vorteilhafte Ausrichtung der Wegmesseinrichtung gegenüber dem Grundkörper und der darin geführten Stellmittel zu gewährleisten.

Zweckmäßig ist es, wenn der Grundkörper in einer normal zur Bewegungsachse ausgerichteten Querschnittsebene mit einem kreisringförmigen oder kreisringabschnittsförmigen Querschnitt ausgebildet ist. Vorzugsweise berandet der Grundkörper die zur Aufnahme des Stellmittels vorgesehene Ausnehmung, die insbesondere einen kreisförmigen Querschnitt aufweisen kann. Besonders bevorzugt wird dadurch eine kompakte Anordnung der Wegmesseinrichtung und/oder der Steuerventileinrichtung ermöglicht.

Bei einer Weiterbildung der Erfindung ist vorgesehen, dass am Grundkörper wenigstens ein Montageabschnitt als längs der Bewegungsachse ausgerichtete, nutförmige Ausnehmung zur Aufnahme der Wegmesseinrichtung ausgebildet ist. Vorzugsweise weist die nutförmige Ausnehmung in einer quer zur Bewegungsachse ausgerichteten Querschnittsebene einen U-förmigen oder T-förmigen Querschnitt auf, der eine wenigstens in drei Raumrichtungen formschlüssige Aufnahme der exemplarisch als quaderförmiges Bauelement ausgebildeten Wegmesseinrichtung ermöglicht. Durch eine zueinander korrespondierende Gestaltung von nutförmiger Ausnehmung und Wegmesseinrichtung wird eine Ausrichtung der Wegmesseinrichtung parallel zur Bewegungsachse erleichtert. Hierdurch ist eine rasche Justierung der Wegmesseinrichtung ebenso wie eine mechanisch hoch belastbare Aufnahme der Wegmesseinrichtung am Grundkörper gewährleistet.

Bevorzugt sind an einem dem Stellmittel abgewandten Endbereich des Grundkörpers Kupplungsmittel für eine Abdeckglocke angebracht, die zur werkzeuglosen und/oder abdichtenden Festlegung der Abdeckglocke und/oder als Widerlager für den Endbereich der Verriegelungshülse ausgebildet sind. Die Abdeckglocke dient dazu, die am Grundkörper angebrachte Wegmesseinrichtung und/oder die Steuerventilanordnung gegenüber äußeren Einflüssen wie Feuchtigkeit und/oder Verschmutzung zu schützen. Die Kupplungsmittel sind derart ausgebildet, dass sie eine werkzeuglose und/oder abdichtende Festlegung der Abdeckglocke ermöglichen. Somit kann diese gegebenenfalls zu Wartungszwecken in einfacher Weise vom Grundkörper abgenommen werden und ebenfalls in einfacher Weise wieder auf diesen aufgesetzt werden und somit ihre Funktion als Schutzeinrichtung ausüben. Alternativ oder ergänzend können die Kupplungsmittel als Widerlager für den Endbereich der Verriegelungshülse ausgebildet sein, die im Grundkörper drehbar gelagert ist. Da die Verriegelungshülse einen auf den Bewegungshub des Stellmittels angepasste Länge aufweist, die ein Mehrfaches des Durchmessers der Verriegelungshülse betragen kann, ist eine Abstützung der Verriegelungshülse an einem im Bereich der Kupplungsmittel ausgebildeten Widerlager für die Drehlagerung der Verriegelungshülse vorteilhaft.

Zweckmäßig ist es, wenn an einer Umfangsfläche des Grundkörpers eine Ringnut ausgebildet ist, in der ein Dichtring für eine abdichtende Anlage einer Abdeckglocke aufnehmbar ist. Hierdurch kann mit einfachen Mitteln eine abdichtende Verbindung zwischen dem Grundkörper einerseits und der Abdeckglocke andererseits erreicht werden. Bei dem Dichtring kann es sich um einen Rundschnurring oder einen profilierten O-Ring handeln, der in der umlaufenden Ringnut am Grundkörper aufgenommen ist und den für die Montage der Abdeckglocke notwendigen Ringspalt gegenüber einer Innenoberfläche der Abdeckglocke abdichtet.

Bei einer vorteilhaften Weiterbildung der Erfindung ist vorgesehen, dass der Grundkörper zusammen mit der Abdeckglocke ein abgedichtetes Volumen für die Steuerventileinrichtung und/oder die Wegmesseinrichtung ausbildet. Hierdurch werden Verschmutzungen und sonstige äußere Einflüsse von der Steuerventileinrichtung und der Wegmesseinrichtung abgehalten.

Eine vorteilhafte Ausführungsform der Erfindung ist in der Zeichnung dargestellt. Hierbei zeigt:
- Figur 1: eine perspektivische Darstellung eines Steuerkopfs für ein fluidisch ansteuerbares Ventil,
- Figur 2: eine Draufsicht auf den Steuerkopf gemäß Figur 1 in einer Schnittdarstellung,
- Figur 3: eine erste perspektivische Ansicht des Steuerkopfs mit abgenommener Abdeckglocke,
- Figur 4: eine zweite perspektivische Darstellung des Steuerkopfs mit abgenommener Abdeckglocke,
- Figur 5: eine seitliche Schnittdarstellung des Steuerkopfs und
- Figur 6: eine seitliche Schnittdarstellung des Steuerkopfs, der auf einem fluidisch ansteuerbaren Ventil aufgesetzt ist.

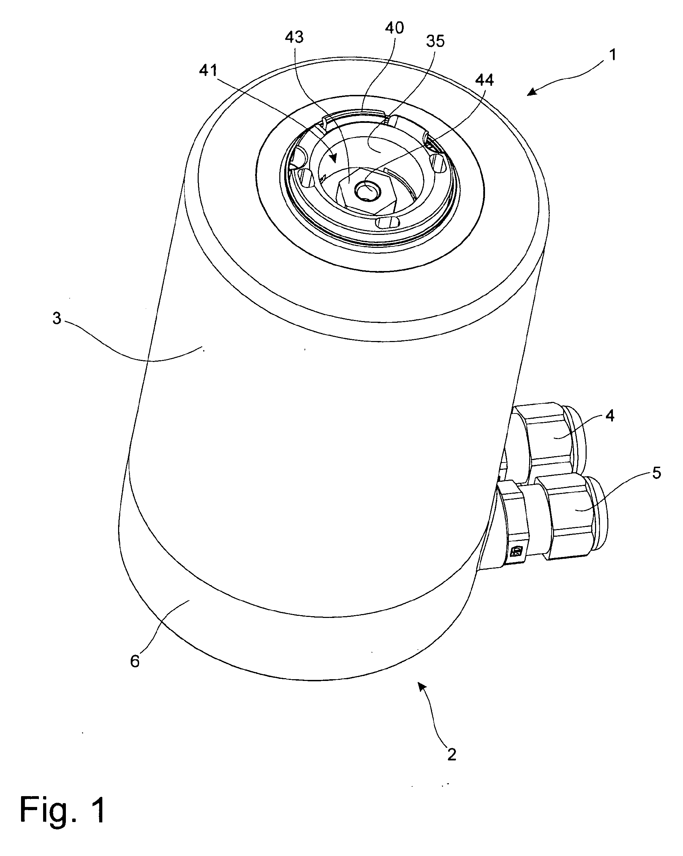

Ein in der Figur 1 dargestellter Steuerkopf 1 ist zum Aufsetzen auf ein nicht dargestelltes, fluidisch ansteuerbares Ventil ausgebildet. Bei dem Ventil kann es sich insbesondere um ein Prozessventil handeln, das zur Beeinflussung einer Strömung eines Prozessmediums, beispielsweise eines Gases oder einer Flüssigkeit, ausgebildet ist. Dem Steuerkopf 1 kommt hierbei die Aufgabe zu, das fluidisch ansteuerbare Ventil durch Bereitstellung eines druckbeaufschlagten Fluids in die gewünschte Ventilstellung zu bringen. Hierzu sind im Steuerkopf 1 verschiedene, nachstehend näher beschriebene Komponenten enthalten, die eine Fluidbereitstellung sowie gegebenenfalls eine Überwachung der Ventilstellung des fluidisch ansteuerbaren Ventils ermöglichen.

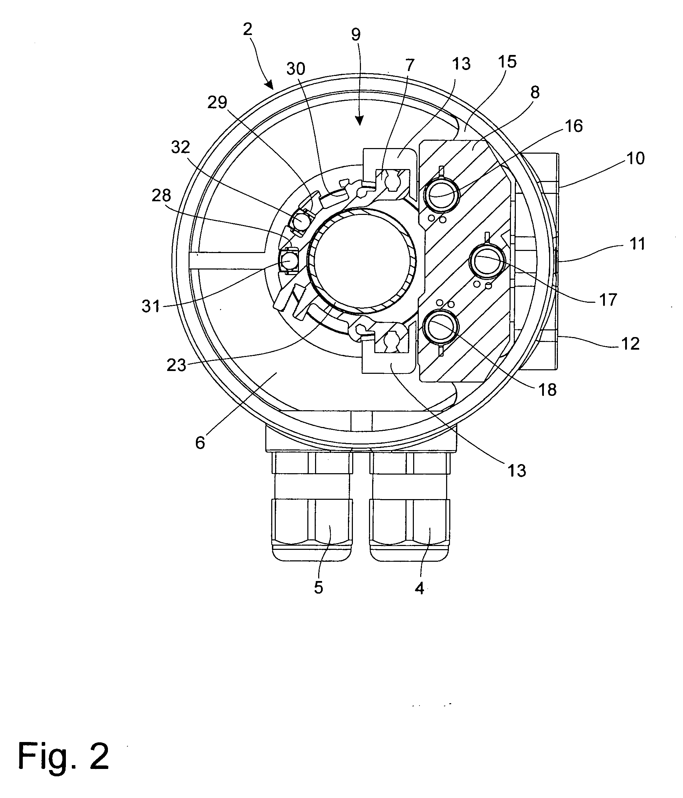

Der Steuerkopf 1 umfasst einen exemplarisch mehrteilig ausgebildeten Grundkörper 2, der als Träger für mehrere unterschiedliche Komponenten zur Beeinflussung und/oder Regelung eines Steuerfluidstroms an das fluidisch ansteuerbare Ventil dient. Der Grundkörper 2 umschließt hierzu mit einer napfartig ausgebildeten Abdeckglocke 3 einen nachstehend näher beschriebenen und in der Figur 2 bezeichneten Komponentenraum 9, in dem die zur Ansteuerung und/oder Regelung des fluidisch ansteuerbaren Ventils notwendigen Komponenten von Umgebungseinflüssen abgeschirmt aufgenommen sind.

Am Grundkörper 2 sind gemäß der Figur 1 exemplarisch zwei Anschlussstutzen 4, 5 angebracht, die jeweils für eine Hindurchführung eines nicht dargestellten elektrischen Kabels in den Komponentenraum 9 ausgebildet sind. Mit Hilfe der nicht dargestellten Kabel können beispielsweise elektrische Versorgungsspannungen und/oder Steuersignale von einer nicht dargestellten Versorgungs- und/oder Steuereinheit an den Steuerkopf 1 bereitgestellt werden. Zudem können gegebenenfalls Sensorsignale vom Steuerkopf 1 an die nicht dargestellte Versorgungs- und/oder Ansteuereinheit übertragen werden.

Aus der Darstellung der Figur 2, in der der Steuerkopf 1 in einer Draufsicht bereichsweise geschnitten und ohne die Abdeckglocke 3 dargestellt ist, geht hervor, dass zusätzlich zu den Anschlussstutzen 4, 5 für die elektrische Versorgung des Steuerkopfs 1 auch mehrere fluidische Anschlussstutzen 10 bis 12 am Grundkörper 2 vorgesehen sind. Diese sind für die Bereitstellung eines oder mehrerer druckbeaufschlagter Fluide, insbesondere Druckluft, an den Steuerkopf 1 ausgebildet. Exemplarisch sind die fluidischen Anschlussstutzen 10 bis 12 einstückig an einem napfförmig ausgebildeten Koppelkörper 6 vorgesehen, der zusammen mit einem im Wesentlichen U-förmig ausgebildeten Sensorträger 7 den Grundkörper 2 bildet. Vorzugsweise ist der Koppelkörper 6 als Aluminium-Druckgussteil oder als Kunststoff-Spritzgussteil ausgebildet. Besonders bevorzugt ist der Sensorträger 7 mit einem über seine gesamte Längenausdehnung im Wesentlichen gleichen, aus der Darstellung der Figur 2 erkennbaren Querschnitt ausgebildet. Insbesondere ist der Sensorträger 7 als Aluminium-Strangpressteil ausgebildet. Der Sensorträger 7 wird vorzugsweise mittels zweier U-förmiger, einander gegenüberliegender, am Koppelkörper 6 einstückig ausgebildeter Führungsschienen 13 gegenüber dem Koppelkörper 6 ausgerichtet.

Am Koppelkörper 6 ist im Bereich der fluidischen Anschlussstutzen 10 bis 12 eine parallel zur Darstellungsebene der Figur 2 ausgerichtete, vorzugsweise plan ausgebildete Koppelfläche 15 vorgesehen. Auf die Koppelfläche 15 ist exemplarisch ein in der Figur 2 geschnitten dargestellter Fluidblock 8 abdichtend aufgesetzt. Die nicht näher dargestellten, von den fluidischen Anschlussstutzen 10 bis 12 im Wesentlichen in radialer Richtung nach innen bzw. in senkrechter Richtung zur Darstellungsebene der Figur 2 verlaufenden, in der Figur 2 nicht sichtbaren Fluidkanäle münden an der Koppelfläche 15 aus. Die Fluidkanäle sind für eine kommunizierende Verbindung zwischen den im Fluidblock 8 ausgebildeten Fluidbohrungen 16 bis 18 und den jeweils zugeordneten fluidischen Anschlussstutzen 10 bis 12 vorgesehen.

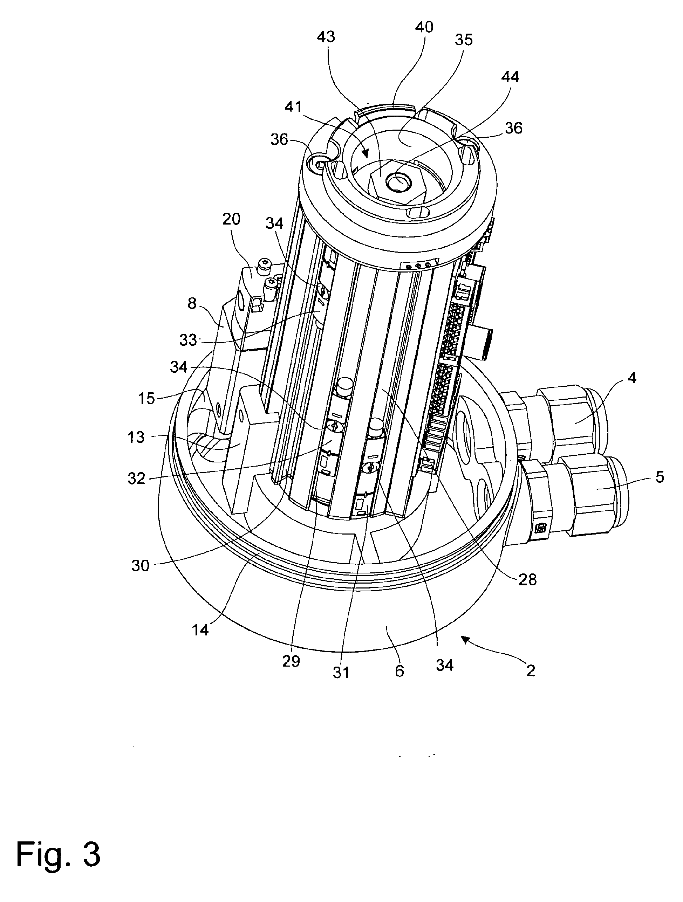

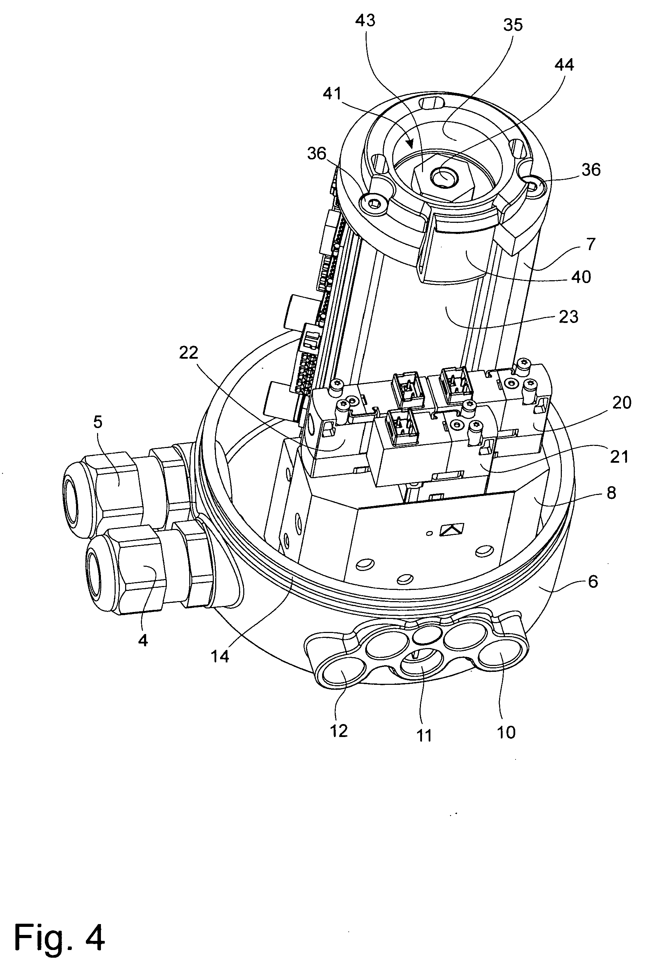

Wie aus den Figuren 3 und 4 entnommen werden kann, sind an einer beispielhaft parallel zur Koppelfläche 15 ausgerichteten Oberfläche 19 des Fluidblocks 8 exemplarisch drei Ventileinrichtungen 20 bis 22 angebracht, die beispielsweise als Magnetventile oder Piezoventile ausgebildet sein können und die zur Beeinflussung der an den fluidischen Anschlussstutzen 10 bis 12 bereitstellbaren druckbeaufschlagten Fluide ausgebildet sind, um das oder die druckbeaufschlagten Fluide in vorgebbarer Weise an das nicht dargestellte Ventil weiterleiten zu können.

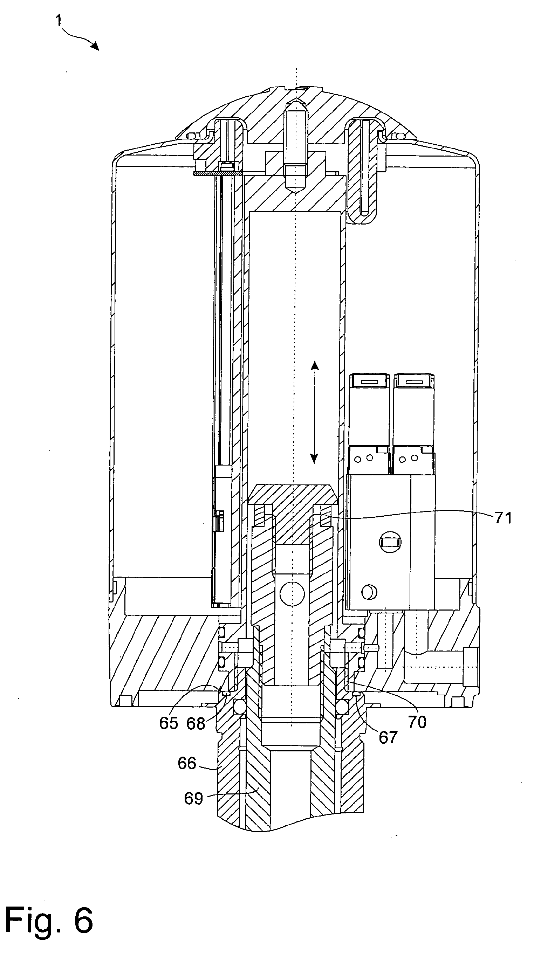

Der Sensorträger 7 umgreift bereichsweise eine exemplarisch kreisringartig ausgebildete, längs einer Bewegungsachse 24 erstreckte, als Führungshülse 23 ausgebildete Verriegelungshülse, in der Art einer Gleitlagerung. Die um die Bewegungsachse 24 verdrehbar im Grundkörper 2 gelagerte Führungshülse 23 dient als Verriegelungshülse zur Festlegung des Grundkörpers 2 an dem nicht näher dargestellten fluidisch ansteuerbaren Ventil und zur linearbeweglichen Aufnahme eines in der Figur 6 näher dargestellten Stellmittels des fluidisch ansteuerbaren Ventils.

Am Sensorträger 7 sind mehrere, insbesondere T-förmige, Aufnahmenuten 28 bis 30 ausgebildet, in denen beispielsweise in der Figur 3 näher dargestellte Endlagenschalter 31 bis 33 aufnehmbar sind. Bei den Endlagenschaltern 31 bis 33 kann es sich beispielsweise um Hallsensoren oder Reed-Schalter handeln, die zusammen mit dem in Figur 6 näher dargestellten Stellmittel eine Positionsbestimmung für eine Funktionsstellung des fluidisch ansteuerbaren Ventils ermöglichen. Vorzugsweise sind die Endlagenschalter 31 bis 33 als im Wesentlichen kubische Körper ausgebildet, deren Abmessungen im Wesentlichen auf die Abmessungen der Aufnahmenuten 28 bis 30 angepasst sind, so dass die Endlagenschalter 31 bis 33 nahezu spielfrei längs der Aufnahmenuten 28 bis 30 parallel zur Bewegungsachse 24 verschoben werden können. Aufgrund der exemplarisch vorgesehenen T-Profilierung der Aufnahmenuten 28 bis 30 können die Endlagenschalter 31 bis 33 mit Hilfe von geeigneten Drehriegeln 34 kraft- bzw. formschlüssig in den Aufnahmenuten 28 bis 30 ortsfest festgelegt werden.

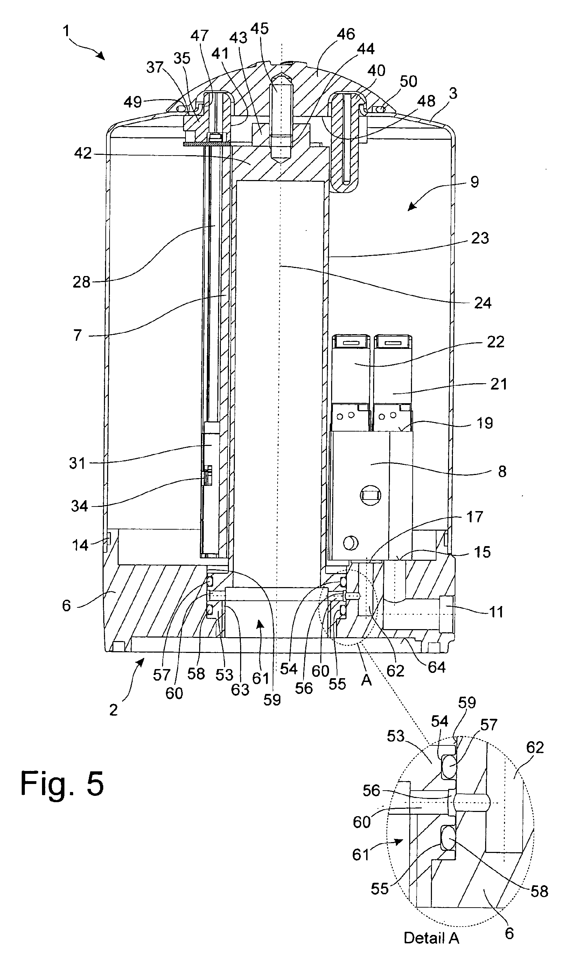

An einem dem Koppelkörper 6 abgewandten Endbereich des Sensorträgers 7 ist ein im Wesentlichen rotationssymmetrisch ausgebildeter Koppelring 35 angebracht. Der Koppelring 35 ist mittels, exemplarisch als Schrauben ausgebildeten, Befestigungsmitteln 36 mit dem Sensorträger 7 verbunden und weist einen zumindest nahezu vollständig umlaufenden Ringbund 37 auf, der als Auflagefläche für die Abdeckglocke 3 dient. Darüber hinaus ist exemplarisch am Koppelring 35 eine in den Figur 5 und 6 näher erkennbare, elastisch gelagerte Rastnase 40 vorgesehen, die für eine formschlüssige Arretierung der Abdeckglocke 3 ausgebildet ist. Darüber hinaus dient eine zylindrisch ausgebildete Ausnehmung 41 im Koppelring 35 als Widerlager in Form eines Gleitlagers für die Führungshülse 23, die um die Bewegungsachse 24 drehbar gelagert ist.

Wie aus der Schnittdarstellung der Figur 5 entnommen werden kann, ist die Führungshülse 23 endseitig im Bereich des Koppelrings 35 mit einem Abschlussdeckel 42 versehen, der die Führungshülse 23 endseitig abdichtet und exemplarisch einstückig angeformt sein kann. Der Abschlussdeckel 42 trägt beispielhaft einen Außensechskant 43, der Schlüsselflächen zur Einleitung eines Drehmoments auf die Führungshülse 23 bereitstellt. Bei Aufbringung eines entsprechenden Drehmoments auf die Führungshülse 23 kann eine Rotationsbewegung der Führungshülse um die Bewegungsachse 24 hervorgerufen werden, mit deren Hilfe eine nachstehend näher beschriebene Ver- bzw. Entriegelung des Steuerkopfs 1 an dem fluidisch ansteuerbaren Ventil erreicht werden kann.

Darüber hinaus ist im Abschlussdeckel 42 eine Gewindebohrung 44 vorgesehen, die zur Aufnahme eines in der Figur 5 näher dargestellten Gewindestifts 45 ausgebildet ist, der seinerseits exemplarisch stoffschlüssig in einem beispielsweise im Kunststoffspritzgussverfahren hergestellten Schraubdeckel 46 aufgenommen ist. Der Schraubdeckel 46 dient zur axialen Fixierung der Abdeckglocke 3 sowie zur Abdichtung der endseitig an der Abdeckglocke 3 vorgesehenen, kreisförmigen Ausnehmung 47, die an den umlaufenden Ringbund 37 des Koppelrings 35 angepasst ist. Für eine Dichtwirkung zwischen Schraubdeckel 46 und Abdeckglocke 3 ist exemplarisch an einer der Abdeckglocke 3 zugewandten ringförmigen Stirnfläche 48 des Schraubdeckels 46 eine umlaufende Nut 49 vorgesehen, in der ein umlaufendes Dichtmittel, beispielsweise ein O-Ring 50, aufgenommen werden kann

An einem dem Abschlussdeckel 42 abgewandten Endbereich der Führungshülse 23 ist ein in radialer Richtung nach außen erstreckter, umlaufender Ringbund 53 vorgesehen. An dem Ringbund 53 sind insgesamt drei in axialer Richtung längs der Bewegungsachse voneinander beabstandete umlaufende Nuten 54 bis 56 vorgesehen, von denen die Nuten 54 und 55 zur Aufnahme von Dichtmitteln 57, 58, insbesondere O-Ringen, vorgesehen sind. Der Ringbund 53 und die Dichtmittel 57, 58 sind dabei derart auf eine vorzugsweise kreisförmige Ausnehmung 59 im Koppelkörper 6 angepasst, dass sie die umlaufende Nut 56 in axialer Richtung längs der Bewegungsachse 24 sowohl nach oben als auch nach unten abdichtend abschließen. Somit kann die umlaufende Nut 56 als abgedichteter Ringkanal dienen. Ausgehend von der umlaufenden Nut 56 erstrecken sich in radialer Richtung nach innen durch die Führungshülse 23 Bohrungen 60, die eine kommunizierende Verbindung zwischen einem von der Führungshülse 23 umschlossenen Innenraum 61 und einem im Koppelkörper 6 ausgebildeten Arbeitskanal 62 gewährleisten. Der Arbeitskanal 62 steht in nicht näher dargestellter Weise über den Fluidblock 8 mit wenigstens einer der Ventileinrichtungen 20 bis 22 in kommunizierender Verbindung und kann somit je nach Schaltstellung der zugeordneten Ventileinrichtung 20 bis 22 in kommunizierende Verbindung mit einem der fluidischen Anschlussstutzen 10 bis 12 gebracht werden, um eine Zufuhr oder Abfuhr von druckbeaufschlagtem Fluid in den Innenraum 61 oder aus dem Innenraum 61 zu ermöglichen. Darüber hinaus dient die Kombination aus Ringbund 53 und kreisförmiger Ausnehmung 59 im Koppelkörper 6 zusammen mit den dazwischen vorgesehenen Dichtmitteln 57, 58 als Drehlager für die Führungshülse 23, die an dem benachbart zum Ringbund 53 angeordneten offenen Ende mit einem Innengewinde 63 versehen ist, das für eine Verschraubung mit dem in Figur 6 dargestellten, fluidisch ansteuerbaren Ventil dient.

Für eine Festlegung des Steuerkopfs 1 an dem in Figur 6 näher dargestellten fluidisch ansteuerbaren Ventil ist an einer Unterseite des Koppelkörpers 6 eine im Wesentlichen ebene Anlagefläche 64 ausgebildet, die zur Auflage auf einem Ringbund 65 eines Schaftabschnitts 66 ausgebildet ist. Exemplarisch ist der Ringbund 65 mit einer der Anlagefläche 64 zugewandten, umlaufenden Nut 67 versehen, die zur Aufnahme eines Dichtmittels 68 dient, um eine fluiddichte Abdichtung zwischen Koppelkörper 6 und Schaftabschnitt 66 zu gewährleisten. In dem Schaftabschnitt 66 des Ventils ist ein mehrteiliges, im Wesentlichen hülsenförmiges Stellmittel 69 linearbeweglich längs der Bewegungsachse 24 angeordnet, das auf ein längs der Bewegungsachse 24 in einem vom Steuerkopf 1 beabstandeten Bereich angeordnetes, nicht dargestelltes Ventilglied wirkt, um das Ventilglied beispielsweise aus einer Öffnungsstellung in eine Schließstellung oder umgekehrt zu überführen. Das Stellmittel 69 ist vorzugsweise als Bestandteil eines Stellkolbens ausgebildet, der durch Beaufschlagung des im Wesentlichen von der Führungshülse 23 begrenzten Innenraums 61 längs der Bewegungsachse 24, beispielsweise in vertikaler Richtung nach unten gemäß der Darstellung der Figur 6, bewegt werden kann. Durch diese lineare Bewegung des Stellmittels 69 kann das nicht dargestellte Ventilglied der fluidisch ansteuerbaren Ventileinrichtung einen Querschnitt einer Fluidleitung sperren oder freigeben.

Für die Montage des Steuerkopfs 1 auf den Schaftabschnitt 66 des nicht näher dargestellten fluidisch ansteuerbaren Ventils wird zunächst der Schraubdeckel 46 durch Lösen des in der Gewindebohrung 44 aufgenommenen Gewindestift 45 im Zuge einer Rotationsbewegung um die Bewegungsachse 24 abgehoben. Dabei wird auch die abdichtende Verbindung zwischen Schraubdeckel 46 und der Oberfläche der Abdeckglocke 3 aufgehoben. Durch das Abnehmen des Schraubdeckels 46 ist der Außensechskant 43, der endseitig an der Führungshülse 23 angebracht ist, freigegeben. In einem nachfolgenden Schritt kann der Steuerkopf 1 mit der Anlagefläche 64 des Koppelkörpers 6 auf den Ringbund 65 des Schaftabschnitts 66 aufgesetzt werden. Für diesen Aufsetzvorgang wird ein Drehmoment auf den Außensechskant 43 mit Hilfe eines nicht dargestellten Betätigungsmittels, beispielsweise eines Schraubenschlüssels, ausgeübt. Durch dieses Drehmoment wird eine Rotation der Führungshülse 23 um die Bewegungsachse 24 hervorgerufen. Dabei stützt sich die Führungshülse 23 bei der Drehbewegung in der Ausnehmung 41 des Koppelrings 35 sowie in der kreisförmigen Ausnehmung 59 des Koppelkörpers 6 ab. Durch die Drehbewegung erfolgt ein Eingriff des endseitig an einem offenen Ende der Führungshülse 23 vorgesehenen Innengewindes 63 auf ein am Schaftabschnitt 66 ausgebildetes Außengewinde 70. Dadurch kann eine formschlüssige Verbindung zwischen Führungshülse 23 und dem Schaftabschnitt 66 geschaffen werden. Bei erfolgter Festlegung des Steuerkopfs 1 am Ventil wird zudem eine abdichtende Verbindung zwischen der Anlagefläche 64 des Koppelkörpers 6 und dem Ringbund 65 des Schaftabschnitts 66 bewirkt.

Durch die Anordnung der Nuten 54 bis 56 im Ringbund 53 der Führungshülse 23 wird der von der rotatorischen Stellung der Führungshülse 23 um die Bewegungsachse 24 unabhängiger Ringkanal 56 begrenzt, der zu jedem Zeitpunkt eine kommunizierende Verbindung zwischen dem Innenraum 61 und dem Arbeitskanal 62 gewährleistet. Somit ermöglicht die Führungshülse 23 drehstellungsunabhängig eine Zu- und/oder Abfuhr von druckbeaufschlagtem Fluid in bzw. aus dem Innenraum 61, wodurch die gewünschte, insbesondere lineare, Bewegung des Stellmittels 69 hervorgerufen werden kann.

Das Stellmittel 69 kann an einem dem Steuerkopf 1 zugewandten Endbereich beispielsweise mit einer ringförmig ausgebildeten Magneteinrichtung 71 versehen sein, die als Signalgeber für die im Sensorträger 7 angeordneten Endlagenschalter 31 bis 33 dient. Diese Endlagenschalter 31 bis 33 sind beispielsweise als Hall-Sensoren ausgebildet und können längs der Bewegungsachse 24 in den Aufnahmenuten 28 bis 30 verschoben werden und mit Hilfe von jeweils zugeordneten Drehriegeln 34 in der gewünschten Position festgelegt werden. Die Endlagenschalter 31 bis 33 weisen eine nicht dargestellte Kabelverbindung mit einer ebenfalls nicht dargestellten Auswerteeinrichtung auf, wobei die Kabel durch einen der Anschlussstutzen 4, 5 geführt werden können. Die am Fluidblock 8 angebrachten Ventileinrichtungen 20 bis 22 stehen ebenfalls über eine nicht dargestellte elektrische Kabelverbindung mit einer Steuereinrichtung in Verbindung.

Zur Einstellung der Position der Endlagenschalter 31 bis 33 längs der Bewegungsachse 24 und/oder zur Wartung der Ventileinrichtungen 20 bis 22 kann durch Zurückdrücken der elastisch gelagerten Rastnase 40 die Abdeckglocke 3 freigegeben werden und vom Koppelring 35 abgehoben werden. Hierbei wird auch eine abdichtende Verbindung zwischen dem offenen Endbereich der Abdeckglocke 3 und dem Koppelkörper 6 gelöst, die in der Art eines umlaufenden Ringbunds mit integrierter umlaufender Dichtungsnut 14 ausgeführt ist. Nach Abnehmen der Abdeckglocke 3 sind die Ventileinrichtungen 20 bis 22 und die Endlagenschalter 31 bis 33 frei zugänglich und können ausgetauscht, eingestellt oder gewartet werden.

Dadurch, dass sowohl die Endlagenschalter 31 bis 33 über den Sensorträger 7 mit den Koppelkörper 6 verbunden sind und die Ventileinrichtungen 20 bis 22 über den Fluidblock 8 ebenfalls mit dem Koppelkörper 6 verbunden sind, bildet der Steuerkopf 1 eine vollständig funktionsfähige Baugruppe, die aufgrund der Befestigungswirkung der Führungshülse 23 am Schaftabschnitt 66 in einfacher Weise angebaut bzw. ausgetauscht werden kann. Dabei ist die Führungshülse 23 in einer Doppelfunktion einerseits als Befestigungsmittel mit dem Innengewinde 63 versehen, um die gewünschte Festlegung des Grundkörpers 2, insbesondere des Koppelkörpers 6, am Schaftabschnitt 66 zu bewirken. Darüber hinaus dient die Führungshülse 23 zur Begrenzung des fluidisch wirksamen Innenraums 61, der als Kolbenraum für das Stellmittel 69 dient. Somit erfüllt der Steuerkopf 1 zwei wesentliche Aufgaben, die zum einen darin bestehen, die Druckbeaufschlagung des Stellmittels 69 zur Beeinflussung der Stellung des nicht dargestellten Ventilglieds des fluidisch einstellbaren Ventils zu ermöglichen und andererseits die Position des Stellmittels 69 in einfacher Weise ermitteln zu können.

Durch die langgestreckte Ausführung der Führungshülse 23 und die vom nicht näher dargestellten fluidisch ansteuerbaren Ventil abgewandte Zugangsöffnung, die als kreisförmige Ausnehmung 47 in der Abdeckglocke 3 ausgebildet ist, wird auch ein Verschmutzen der im Komponentenraum 9 des Steuerkopfs 1 vorgesehenen Komponenten, insbesondere der Endlagenschalter 31 bis 33 und der Ventileinrichtungen 20 bis 22 nahezu ausgeschlossen. Weiterhin ist vorteilhaft, dass durch den eindeutigen geometrischen Bezug zwischen der am Koppelkörper 6 ausgebildeten Anlagefläche 64 und dem am Schaftabschnitt 66 ausgebildeten Ringbund 65 sowie durch die Wirkung der Führungshülse 23 eine eindeutige Positionierung des Steuerkopfs 1 längs der Bewegungsachse 24 ermöglicht wird, so dass selbst bei Entfernen und erneutem Wiederaufsetzen eine reproduzierbare Lage der Endlagenschalter 31 bis 33 gegenüber dem Stellmittel 69 gewährleistet ist.

Darüber hinaus müssen abseits der Schraubverbindung zwischen Führungshülse 23 und Schaftabschnitt 66 keine weiteren Verbindungen zwischen dem Steuerkopf 1 und dem fluidisch ansteuerbaren Ventil gelöst werden bzw. angezogen werden, vielmehr stellt der Steuerkopf 1 eine eigenständig funktionsfähige Baugruppe dar, die auch abseits des nicht dargestellten fluidisch ansteuerbaren Ventils getestet, gewartet und justiert werden kann.

## Patentansprüche

1. Steuerkopf für ein fluidisch ansteuerbares Ventil mit einem Grundkörper (2), der eine Kupplungseinrichtung (23, 63, 64) zur Festlegung des Grundkörpers (2) an einem Schaftabschnitt (66) des Ventils aufweist und der eine Steuerventileinrichtung (20, 21, 22) trägt, die zur Bereitstellung eines Steuerfluidstroms ausgebildet ist, um ein im Schaftabschnitt (66) linearbeweglich angeordnetes, fluidisches Stellmittel (69) zur Betätigung des Ventils anzusteuern, sowie mit einer am Grundkörper (2) angeordneten Wegmesseinrichtung (31, 32, 33), die zur Ermittlung einer axialen Position des Stellmittels (69) längs einer Bewegungsachse (24) ausgebildet ist, **dadurch gekennzeichnet, dass** der Grundkörper (2) von einer längs der Bewegungsachse (24) erstreckten Ausnehmung (59) durchsetzt ist, in der eine der Kupplungseinrichtung zugehörige Verriegelungshülse (23) drehbar gelagert aufgenommen ist, wobei die Verriegelungshülse (23) bereichsweise einen Bewegungsraum (61) für das Stellmittel (69) abdichtend begrenzt.

2. Steuerkopf nach Anspruch 1, **dadurch gekennzeichnet, dass** die Verriegelungshülse (23) an einem dem Stellmittel (69) abgewandten Endbereich abdichtend verschlossen ist.

3. Steuerkopf nach Anspruch 1 oder 2, **dadurch gekennzeichnet, dass** die Verriegelungshülse (23) an einem dem Stellmittel (69) zugewandten Endbereich eine Verriegelungsgeometrie (63), insbesondere einen Gewindeabschnitt, zur formschlüssigen Festlegung des Grundkörpers (2) am Schaftabschnitt (66) des Ventils umfasst.

4. Steuerkopf nach einem der vorhergehenden Ansprüche, **dadurch gekennzeichnet, dass** ein Wandbereich der Ausnehmung (59) des Grundkörpers (2) und ein Wandabschnitt der Verriegelungshülse (23) von einem Arbeitskanal (60, 62) durchsetzt sind, der für eine kommunizierende fluidische Verbindung zwischen dem Bewegungsraum (61) für das Stellmittel (69) und der am Grundkörper (2) angebrachten Steuerventileinrichtung (20 bis 22) ausgebildet ist, um eine fluidische Betätigung des Ventils zu ermöglichen.

5. Steuerkopf nach Anspruch 4, **dadurch gekennzeichnet, dass** der Arbeitskanal (60, 62) bereichsweise als umlaufender Ringkanal (56) zwischen dem Wandbereich der Ausnehmung (59) und der Verriegelungshülse (23) ausgebildet ist.

6. Steuerkopf nach Anspruch 5, **dadurch gekennzeichnet, dass** in axialer Richtung beabstandet zum Ringkanal (56) wenigstens ein zwischen dem Wandbereich der Ausnehmung (59) des Grundkörpers (2) und der Verriegelungshülse (23) angeordnetes, umlaufendes Dichtmittel (57, 58) angeordnet ist.

7. Steuerkopf nach einem der vorhergehenden Ansprüche, **dadurch gekennzeichnet, dass** die Verriegelungshülse (23) derart am Grundkörper (2) aufgenommen ist, dass eine Rotationsachse der Verriegelungshülse (23) parallel zur Bewegungsachse (24) des Stellmittels (69) ausgerichtet ist.

8. Steuerkopf nach einem der vorhergehenden Ansprüche, **dadurch gekennzeichnet, dass** die Wegmesseinrichtung (31 bis 33) für eine berührungslose Abtastung der axialen Position des Stellmittels (69) durch die Verriegelungshülse (23) hindurch ausgebildet ist.

9. Steuerkopf nach einem der vorhergehenden Ansprüche, **dadurch gekennzeichnet, dass** der Grundkörper (2) wenigstens zwei Montageabschnitte (15, 28, 29, 30) für eine Festlegung der Wegmesseinrichtung (31, 32, 33) und/oder der Steuerventileinrichtung (20, 21, 22) umfasst, die die Verriegelungshülse (23) zumindest bereichsweise umgeben.

10. Steuerkopf nach einem der vorhergehenden Ansprüche, **dadurch gekennzeichnet, dass** der Grundkörper (2) in einer normal zur Bewegungsachse (24) ausgerichteten Querschnittsebene bereichsweise mit einem kreisringförmigen oder kreisringabschnittsförmigen Querschnitt ausgebildet ist.

11. Steuerkopf nach Anspruch 9, **dadurch gekennzeichnet, dass** am Grundkörper (2) wenigstens ein Montageabschnitt (28, 29, 30) als längs der Bewegungsachse (24) ausgerichtete, nutförmige Ausnehmung (28, 29, 30) zur Aufnahme der Wegmesseinrichtung (31, 32, 33) ausgebildet ist.

12. Steuerkopf nach einem der vorhergehenden Ansprüche, **dadurch gekennzeichnet, dass** an einem dem Stellmittel (69) abgewandten Endbereich des Grundkörpers (2) Kupplungsmittel (35) für eine Abdeckglocke (3) angebracht sind, die zur werkzeuglosen und/oder abdichtenden Festlegung der Abdeckglocke (3) und/oder als Wiederlager für den Endbereich der Verriegelungshülse (23) ausgebildet sind.

13. Steuerkopf nach Anspruch 12, **dadurch gekennzeichnet, dass** an einer Umfangsfläche des Grundkörpers (2) eine Ringnut (14) ausgebildet ist, in der ein Dichtring für eine abdichtende Anlage einer Abdeckglocke (3) aufnehmbar ist.

14. Steuerkopf nach Anspruch 12 oder 13, **dadurch gekennzeichnet, dass** der Grundkörper (2) zusammen mit der Abdeckglocke (3) ein abgedichtetes Volumen (9) für die Steuerventileinrichtung (20, 21, 22) und/oder die Wegmesseinrichtung (31, 32, 33) ausbilden.

## Claims

1. Control head for a fluid-controllable valve, comprising a base body (2) which has a coupling device (23, 63, 64) for locating the base body (2) on a shaft section (66) of the valve and which supports a control valve device (20, 21, 22) designed for providing a control fluid flow for the control of a fluidic actuating means (69) provided in the shaft section (66) and capable of linear movement for the actuation of the valve, and further comprising a position sensing device (31, 32, 33) located on the base body (2) and designed for the detection of an axial position of the actuating means (69) along an axis of movement (24), **characterised in that** a recess (59) which extends along the axis of movement (24) and in which a locking sleeve (23) associated with the coupling device is rotatably mounted passes through the base body (2), wherein the locking sleeve (23) sealingly limits a movement space (61) for the actuating means (69) while forming a seal.

2. Control head according to claim 1, **characterised in that** the locking sleeve (23) is sealingly closed in an end region remote from the actuating means (69).

3. Control head according to claim 1 or 2, **characterised in that** the locking sleeve (23) has in an end region facing the actuating means (69) a locking geometry (63), in particular a threaded section, for the positive location of the base body (2) on the shaft section (66) of the valve.

4. Control head according to any of the preceding claims, **characterised in that** a working passage (60, 62) designed for a communicating fluidic connection between the movement space (61) for the actuating means (69) and the control valve device (20 to 22) mounted on the base body (2) in order to permit a fluidic actuation of the valve passes through a wall region of the recess (59) of the base body (2) and through a wall region of the locking sleeve (23).

5. Control head according to claim 4, **characterised in that** the working passage (60, 62) is in some regions designed as a continuous annular passage (56) between the wall region of the recess (59) and the locking sleeve (23).

6. Control head according to claim 5, **characterised in that** at least one circular sealing means (57, 58) located at an axial distance from the annular passage (56) is provided between the wall region of the recess (59) of the base body (2) and the locking sleeve (23).

7. Control head according to any of the preceding claims, **characterised in that** the locking sleeve (23) is placed on the base body (2) in such a way that an axis of rotation of the locking sleeve (23) is oriented parallel to the axis of movement (24) of the actuating means (69).

8. Control head according to any of the preceding claims, **characterised in that** the position sensing device (31 to 33) is designed for the contactless scanning of the axial position of the actuating means (69) through the locking sleeve (23).

9. Control head according to any of the preceding claims, **characterised in that** the base body (2) comprises at least two mounting sections (15, 28, 29, 30) for a location of the position sensing device (31, 32, 33) and/or of the control valve device (20, 21, 22), the mounting sections (15, 28, 29, 30) surrounding at least some regions of the locking sleeve (23).

10. Control head according to any of the preceding claims, **characterised in that** the base body (2) is in some regions designed with an annulus-shaped or annulus section-shaped cross-section in a cross-sectional plane oriented perpendicular to the axis of movement (24).

11. Control head according to claim 9, **characterised in that** at least one mounting section (28, 29, 30) is designed on the base body (2) as a groove-shaped recess (28, 29, 30) oriented along the axis of movement (24) for the accommodation of the position sensing device (31, 32, 33).

12. Control head according to any of the preceding claims, **characterised in that** coupling means (35) for a cover bell (3), which are designed for the tool-less and/or sealing location of the cover bell (3) and/or as abutments for the end region of the locking sleeve (23), are mounted in an end region of the base body (2) remote from the actuating means (69).

13. Control head according to claim 12, **characterised in that** an annular groove (14) in which a sealing ring can be accommodated for a sealing contact of a cover bell (3) is formed on a circumferential surface of the base body (2).

14. Control head according to claim 12 or 13, **characterised in that** the base body (2), together with the cover bell (3), forms a sealed volume (9) for the control valve device (20, 21, 22) and/or the position sensing device (31, 32, 33).

## Revendications

1. Tête de commande pour une soupape à commande fluidique, comprenant un corps de base (2), qui présente un dispositif de couplage (23, 63, 64) servant à fixer le corps de base (2) au niveau d'un segment de tige (66) de la soupape et qui supporte un dispositif à soupape de commande (20, 21, 22), qui est réalisé pour fournir un flux de fluide de commande afin de commander un moyen de réglage (69) fluidique disposé dans le segment de tige (66) de manière mobile linéairement et servant à actionner la soupape, comprenant également un système de mesure de course (31, 32, 33) disposé au niveau du corps de base (2), lequel est réalisé pour déterminer une position axiale du moyen de réglage (69) le long d'un axe de déplacement (24), **caractérisée en ce que** le corps de base (2) est traversé par un évidement (59) agencé le long de l'axe de déplacement (24), dans lequel évidement est logée de manière à pouvoir tourner une douille de verrouillage (23) faisant partie du dispositif de couplage, sachant que la douille de verrouillage (23) délimite tout en assurant l'étanchéité par endroits un espace de déplacement (61) pour le moyen de réglage (69).

2. Tête de commande selon la revendication 1, **caractérisée en ce que** la douille de verrouillage (23) est fermée de manière à assurer l'étanchéité au niveau d'une zone d'extrémité opposée au moyen de réglage (69).

3. Tête de commande selon la revendication 1 ou 2, **caractérisée en ce que** la douille de verrouillage (23) comprend, au niveau d'une zone d'extrémité tournée vers le moyen de réglage (69), une structure géométrique de verrouillage (63), en particulier un segment fileté, servant à fixer par complémentarité de forme le corps de base (2) au niveau du segment de tige (66) de la soupape.

4. Tête de commande selon l'une quelconque des revendications précédentes, **caractérisée en ce qu'**une zone de paroi de l'évidement (59) du corps de base (2) et une section de paroi de la douille de verrouillage (23) sont traversées par un canal de travail (60, 62), qui est réalisé pour établir une communication fluidique communicante entre l'espace de déplacement (61) pour le moyen de réglage (69) et le dispositif à soupape de commande (20 à 22) placé au niveau du corps de base (2) afin de permettre un actionnement fluidique de la soupape.

5. Tête de commande selon la revendication 4, **caractérisée en ce que** le canal de travail (60, 62) est réalisé par endroits sous la forme d'un canal annulaire (56) périphérique entre la zone de paroi de l'évidement (59) et la douille de verrouillage (23).

6. Tête de commande selon la revendication 5, **caractérisée en ce qu'**au moins un moyen étanche (57, 58) périphérique disposé entre la zone de paroi de l'évidement (59) du corps de base (2) et la douille de verrouillage (23) est disposé dans la direction axiale à distance du canal annulaire (56).

7. Tête de commande selon l'une quelconque des revendications précédentes, **caractérisée en ce que** la douille de verrouillage (23) est logée au niveau du corps de base (2) de telle manière qu'un axe de rotation de la douille de verrouillage (23) est orienté de manière parallèle par rapport à l'axe de déplacement (24) du moyen de réglage (69).

8. Tête de commande selon l'une quelconque des revendications précédentes, **caractérisée en ce que** le dispositif de mesure de course (31 à 33) est réalisé pour sonder sans contact la position axiale du moyen de réglage (69) à travers la douille de verrouillage (23).

9. Tête de commande selon l'une quelconque des revendications précédentes, **caractérisée en ce que** le corps de base (2) comprend au moins deux segments de montage (15, 28, 29, 30) pour fixer le dispositif de mesure de course (31, 32, 33) et/ou le dispositif à soupape de commande (20, 21, 22), lesdits segments de montage entourant au moins par endroits la douille de verrouillage (23).

10. Tête de commande selon l'une quelconque des revendications précédentes, **caractérisée en ce que** le corps de base (2) est réalisé par endroits avec une section transversale présentant une forme circulaire ou une forme de section circulaire dans un plan de section transversale orienté de manière perpendiculaire par rapport à l'axe de déplacement (24).

11. Tête de commande selon la revendication 9, **caractérisée en ce qu'**au moins une section de montage (28, 29, 30) est réalisée au niveau du corps de base (2) sous la forme d'un évidement (28, 29, 30) présentant une forme de rainure, qui est orienté le long de l'axe de déplacement (24) et qui sert à recevoir le dispositif de mesure de course (31, 32, 33).

12. Tête de commande selon l'une quelconque des revendications précédentes, **caractérisée en ce que** sont placés, au niveau d'une zone d'extrémité, opposée au moyen de réglage (69), du corps de base (2), des moyens de couplage (35) pour une cloche d'obturation (3), lesdits moyens de couplage étant réalisés pour fixer sans outil et/ou de manière à assurer l'étanchéité la cloche d'obturation (3) et/ou étant réalisés sous la forme de supports complémentaires pour la zone d'extrémité de la douille de verrouillage (23).

13. Tête de commande selon la revendication 12, **caractérisée en ce qu'**est réalisée, au niveau d'une surface périphérique du corps de base (2), une rainure annulaire (14), dans laquelle il est possible de loger une bague d'étanchéité pour appuyer de manière étanche la cloche d'obturation (3).

14. Tête de commande selon la revendication 12 ou 13, **caractérisée en ce que** le corps de base (2) et la cloche d'obturation (3) forment un volume (9) rendu étanche pour le dispositif à soupape de commande (20, 21, 22) et/ou pour le dispositif de mesure de course (31, 32, 33).
